# EUROPÄISCHE PATENTSCHRIFT

(11) **EP 2 645 505 B1**
(45) Veröffentlichungstag und Bekanntmachung des Hinweises auf die Patenterteilung: **25.10.2017**
(21) Anmeldenummer: 13160912.5
(22) Anmeldetag: 25.03.2013
(51) Int. Cl.: H02G 3/12, H02G 3/14

(54) **ELEKTRISCHES INSTALLATIONSGERÄT**
ELECTRIC INSTALLATION DEVICE
APPAREIL D'INSTALLATION ÉLECTRIQUE

(30) Priorität: 30.03.2012 DE 102012006570
(43) Veröffentlichungstag der Anmeldung: 02.10.2013
(73) Patentinhaber: Kindermann GmbH, 97243 Eibelstadt (DE)
(72) Erfinder: Janotta, Gerhard, 97084 Würzburg (DE)
(74) Vertreter: Pöhner, Wilfried Anton

(56) Entgegenhaltungen:
- EP-A1- 1 798 899
- EP-A1- 2 075 888
- GB-A- 2 345 200
- US-A- 5 243 135

## Beschreibung

Die Erfindung bezieht sich auf ein, elektrisches Installationsgerät zur Installation von Datenanschlussmodulen in einer Einbauöffnung beispielsweise eine Installationsdose mit einem Montagering zur Verschraubung an der Einbauöffnung, mit wenigstens einer Trägerplatte zur Aufnahme von Kommunikationsschnittstellen und mit einem Schalterrahmen, wobei der Montagering und die Trägerplatte einstückig sind.

Aus der Technologie der Gebäudeinstallation sind neben Netzdosen auch Kommunikationsdosen, sogenannte Datenanschlussmodule, bekannt, die der Aufnahme von Datenleitungen unterschiedlichen Typs dienen. Ähnlich wie bei der Netzversorgung sind die Kommunikationsdosen in einer Einbauöffnung unterzubringen, die entweder durch auf dem Mauerwerk oder einer Wandverkleidung befindliche Dose, der sog. Aufputzdose, oder aber in einer in der Mauer oder einer Wandverkleidung eingelassenen Unterputzdose gebildet werden, wobei die Einbauöffnung im übrigen auch durch das Mauerwerk oder die Wandverkleidung selbst gebildet werden kann. Diese Kommunikationsdosen bestehen in ihren grundsätzlichen Aufbau aus 3 Elementen, nämlich einen Montagering, der mit in der Regel 4 langlochartigen Befestigungslöchern ausgestattet ist und der dazu dient in der Einbauöffnung, z. B. der Wandunterputzdose, mit Hilfe von Schrauben festgelegt zu werden. Auf diesen Ring wird regelmäßig eine Trägerplatte befestigt, deren Aufgabe in der Aufnahme der Kommunikationsschnittstellen besteht und schließlich einen von außen aufgebrachten Schalterrahmen. Die Befestigung erfolgt in der Weise, dass als erstes der Montagering mit wenigstens zwei Schrauben befestigt wird, anschließend der Schalterrahmen aufgesetzt und mithilfe der Trägerplatte, die ihrerseits am Montagering verschraubt wird, festgelegt. Im Ergebnis sind damit wenigstens zwei Schraubverbindungen herzustellen, nämlich zum einen zwischen Montagering und Dose und zum anderen zwischen der Trägerplatte mit dem Schalterrahmen auf dem Montagering. Durch die von außen vorzunehmende Verschraubung ist es unvermeidlich, dass von der Betrachterseite aus die Köpfe von Montageschrauben zu sehen sind. Dies ist als ästhetischer Nachteil zu werten.

Die Offenlegungsschriften EP 2 075 888 A1 und US 5 243 135 A offenbaren ein elektrisches Installationsgerät, welches zur Installation von Datenanschlussmodulen in einer Einbauöffnung, beispielsweise einer Installationsdose, geeignet ist. Das Installati-onsgerät umfasst einen Montagering zur Verschraubung an der Einbauöffnung, eine Trägerplatte zur Aufnahme von wenigstens einer Kommunikationsschnittstelle und einen Schalterrahmen, wobei der Montagering und die Trägerplatte einstückig sind.

Hiervon ausgehend hat sich die Erfindung die Aufgabe gestellt, ein elektrisches Installationsgerät zu schaffen, bei dem Kommunikationsschnittstellen zur Verfügung gestellt werden.

Gelöst wird diese Aufgabe erfindungsgemäß dadurch, dass der Montagering und die Trägerplatte durch Trennflächen senkrecht deren Ebene, die von Außenrand zu Außenrand durchgehend verlaufen, in mehrere Teile getrennt sind.

Die hierdurch zu erzielenden Vorteile sind vielfältig. Zum einen verkürzen sich die Montagezeiten erheblich, da lediglich ein einziger Verschraubungsvorgang erforderlich ist, mit dem der Montagering, der gleichzeitig auch die Trägerplatte ist, in der Einbauöffnung festgelegt wird. Aufgrund der Einstückigkeit ist die Trägerplatte dann gleichfalls räumlich fixiert, ohne das es eines zusätzlichen Befestigungsschrittes bedürfte. Auch die Herstellung wird wesentlich preisgünstiger, da in einem einzigen Arbeitsschritt z. B. durch Stanzen oder mittels Laserschneiden aus einer Platte gleichzeitig der Montagering und die Trägerplatten herausgeschnitten werden, d. h. es werden einerseits die Einschrauböffnungen für den Durchgriff der Schrauben für die Funktion des Montageringes und andererseits die Öffnungen für den Eingriff der Kommunikationsschnittstellen ausgespart. Selbst redend ist die erfindungsgemäße Vorrichtung grundsätzlich für die unterschiedlichsten Arten von Kommunikationssteckdosen, wie Sie für den Anschluss von Netzwerken, Kabel, Antennen aber auch von Multimediageräten wie Monitore, Projektore, Receiver, DVD/Blue-Ray-Playern, PC's, Laptops, Druckern, Scannern usw. erforderlich sind, geeignet. Auch ist die konkrete Ausgestaltung der Einbauöffnung grundsätzlich beliebig, sodass das Gerät sowohl in Auf- oder Unterputzdosen oder in einfachen Einbauöffnungen befestigbar ist. Eine Kombination mit den gängigen Schalter- und Rahmenprogramme der bekannten Hersteller der Schalterindustrie wird gewünscht, denn der Anwender möchte das Design seines Schalterprogramms z. B. für die Steckdosen und Lichtschalter auch bei den Kommunikationsdosen beibehalten. Jedoch werden meist nur die gängigen Datenanschlussmodule für das jeweilige Schalterprogramm angeboten, d. h. es werden zahlreiche Kommunikationsschnittstellen nicht angeboten. Einige Hersteller der Kommunikationssteckdosen oder auch der Audio/Video-Industrie bieten diese an. Kombiniert man die Systeme verschiedener Hersteller hat die Anordnung den Nachteil, dass der Mix aus Material und Farben in der Regel nicht zum vorgesehenen Schalterrahmen passt. Die erfindungsgemäß vorgeschlagene Lösung eröffnet die einfache Möglichkeit der Herstellung eines einheitlichen Erscheinungsbildes.

Eine wesentliche Vereinfachung der Montage ergibt sich, wenn benachbarte und durch die Trennung entstandene Ränder verbunden werden, was vor der Montage in die Einbauöffnung vorgenommen werden kann. Wird den einzelnen Teilen ein unterschiedlicher Typ von Schnittstelle zugeordnet, wird es in der Einbausituation vor Ort möglich entsprechend den jeweils geforderten Kommunikationsschnittstellen das jeweils zugeordneten Teil herauszusuchen und mit den anderen Teilen, die dem gleichen oder einer vom Typ her anderen Kommunikationsschnittstelle zugeordnet sind, vor der Montage miteinander zu verbinden. Man erhält eine hohe Flexibilität in den Möglichkeiten der Anpassung an die gegebene Einbausituation vor Ort.

Die Art und Weise der Verbindung der Teile miteinander ist in weiten Grenzen beliebig und kann an den Trennflächen über Rast- oder Steckverbindungen erfolgen. Bevorzugt ist, die Nachbarteile an den entsprechenden Kanten miteinander zu verschrauben. Stets gilt, dass im Ergebnis die miteinander verschraubten Teile in ihrer Gesamtheit die Trägerplatte mit integriertem Montagering bilden. Grundsätzlich ist die Verbindung mit der Einbauöffnung/Dose immer geschraubt ist.
In einer Ausführungsform bestehen der Montagering und die Trägerplatte aus zwei Hälften. Dies erlaubt ein Baukastenprinzip zur Kombination verschiedener Kommunikationsschnittstellen in einer Dose.

Gemäß einer besonders bevorzugten weiteren Ausbildung der Erfindung bestehen der Montagering und die Trägerplatte aus mehreren Segmenten. Auch hier ist der Vorteil, dass ein Baukastenprinzip eine gute Anpassung an die Anforderungen des Anwenders erlaubt und insgesamt ein Maximum an Flexibilität erlaubt.
Besonders bevorzugt ist, ein oder mehrere Sichtblenden an dem Montagering und der Trägerplatte von der Aussenseite her zu befestigen. Sie dienen dazu einen ästhetisch vorteilhaftes Aussehen zu verschaffen, indem die Trägerplatte und der Montagering nach außen zu abgedeckt werden und gleichzeitig die Kommunikationsschnittstellen zur Schaffung eines Zugangs durch Öffnungen umschrieben werden. Weiter wird durch die Maßnahme sicher gestellt, dass auch Schraubenköpfe verdeckt sind.

Eine lösbare Befestigung eröffnet die Möglichkeit der erneuten und wiederholten Zugänglichkeit und folglich die Revision und Reparatur im Bedarfsfalle.
Die Art und Weise der lösbaren Verbindung der Sichtblenden mit dem Montagering und der Trägerplatte ist im Rahmen der Erfindung weitgehend beliebig. Bevorzugt ist einen Klemm- oder Presssitz vorzusehen, in dem auf der Rückseite der Sichtblenden Zapfen mit Zuordnung zu entsprechenden Aufnahmelöchern in dem Montagering und der Trägerplatte angebracht sind. Mit einem kurzen Anpressen rastet die Sichtblende ein, mit dem Vorteil, dass sie bei Bedarf grundsätzlich wieder lösbar wäre.
Neben der Verbesserung des Aussehens bestehen in vielen Fällen eine weitere Funktion der Sichtblenden darin, dass sie in ihrer äußeren Berandung so dimensioniert sind, dass sie an den inneren Rändern des Schalterrahmens von außen anzuliegen kommen. Durch das Befestigen der Sichtblenden wird gleichzeitig der die gesamte Anordnung umgehende Schalterrahmen fixiert. In einem einzigen Arbeitsvorgang werden also Sichtblenden und Schalterrahmen befestigt. Die einzelnen Schalter- und Rahmenprogramme der Hersteller der Schalterindustrie bieten häufig nur einige gängige Datenanschlussmodule im Zusammenhang mit ihrem Schalterprogramm an, d. h. dass zahlreiche Kommunikationsschnittstellen nicht angeboten werden. Andererseits bieten die Hersteller der Kommunikationsindustrie diese Kommunikationssteckdosen an. Eine gemeinsame Verwendung der Schalter- und Kommunikationssteckdosen führt zu unterschiedlichen Formen und Farben und Abmessungen der Einzelelemente. Insbesondere kommt es zu Abweichungen vom Standart Öffnungsmaß 50 x 50 mm, wie es in der DIN-49075 ihren Niederschlag findet. Zur Anpassung unterschiedlicher Größen werden durch die Hersteller in an sich bekannter Weise Adapterrahmen angeboten. Mit deren Hilfe kann das vorgeschlagene Installationsgerät für die Programme verschiedenster Hersteller genutzt werden. Sie sind an ihrem inneren und äußeren Rand derart dimensioniert, dass sie an ihrer inneren Brandung über die von außen her anliegenden Sichtblenden an den Montagering und die Trägerplatte gepresst werden und gleichzeitig ihrerseits mit ihrer äußeren Brandung den Schalterrahmen ebenfalls gegen den Montagering und die Trägerplatte drücken. Anders ausgedrückt: Die Befestigung der Sichtblenden hat eine simultane Festlegung sowohl des Adapterrahmens als auch des Schalterrahmens zum Ergebnis und ist in einem einzigen Arbeitsschritt durchführbar, d. h. die Sichtblende drückt Adapterrahmen und Schalterrahmen beim Einpressen gegen die Einbauöffnung. Schließlich wird vorgesehen, dass mehrere der vorbeschriebene elektrischen Installationsgeräte nebeneinander anordbar sind und einen gemeinsamen, d. h. einstückigen Schalterrahmen aufweisen. Weitere Einzelheiten, Merkmal und Vorteile der Erfindung lassen sich den nachfolgenden Beschreibungsteil entnehmen, indem man an der Zeichnung ein Ausführungsbeispiel der Erfindung näher erläutert wird. Es zeigen
- Figur 1: ein erfindungsgemäßes Installationsgerät in Explosionsdarstellung
- Figur 2: einen Montagering und eineTrägerplatte in Draufsicht

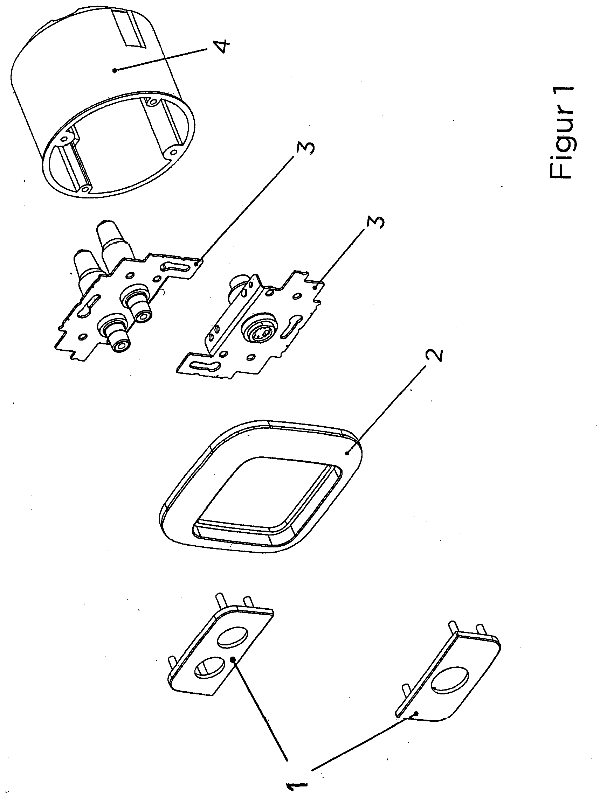

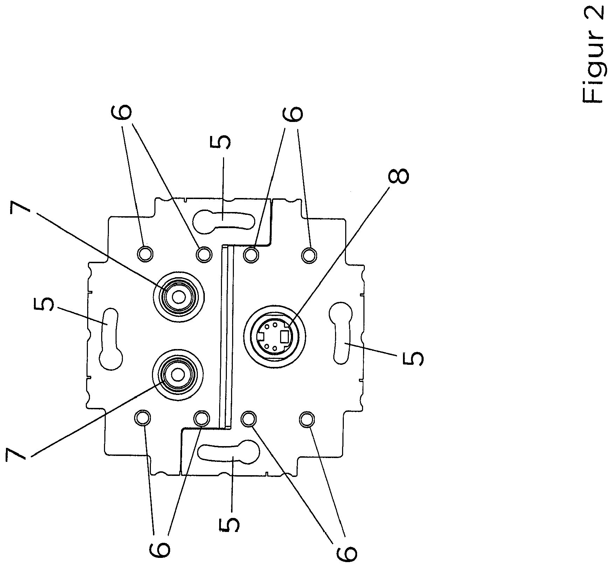

Figur 1 zeigt in Explosionsdarstellung ein erfindungsgemäßes Installationsgerät bestehend aus zwei Hälften (3), die einmal einen Cinch-Doppelstecker und einmal einen S-Video-Anschluss aufweisen, einem Schalterrahmen (2) sowie zwei Sichtblenden (1). Nicht dargestellt sind die Befestigungsschrauben, die zur Befestigung des Installationsgeräts an der Unterputzdose (4) dienen. Die einzelne Hälfte besteht aus einem Montagering und einer Trägerplatte und dem (oder die) eingesteckten Kommunikationsstecker. Dieser Kommunikationsstecker wird hier durch eine Schraubenmutter befestigt. Die zwei Hälften sind durch zwei Schrauben verbindbar. Der dadurch entstehende Montagering und die Trägerplatte weisen in Randnähe vier langlochartige Befestigungslöcher auf, von denen zwei zur Fixierung mittels Befestigungsschrauben an der Einbauöffnung genutzt werden. Hier ist die Einbauöffnung eine Unterputzmontagedose (4).
Zwei Sichtblenden (1) mit an der Unterseite angeformten je vier Zapfen werden durch Einschieben in die passend zugeordneten Aufnahmelöcher im Klemm- oder Press-Sitz und ohne Verwendung von Schrauben aufgesteckt. Diese Sichtblenden (1) fixieren gleichzeitig den darunterliegenden Schalterrahmen (2). Durch Hebeln mit leichtem Kraftaufwand können die Sichtblenden (1) wieder entfernt werden, sodass der Schalterahmen (2) dann nicht mehr fixiert ist. Nun können die Befestigungsschrauben gelöst werden, sodass der zusammengesetzte Montagering und die Trägerplatte (3) mit Kommunikationsstecker aus der Montagedose (4) entnommen werden können. Diese kann nun in zwei Hälften (3) dadurch zerlegt werden, dass die beiden Schrauben entfernt und dadurch die Hälften trennbar sind. Diesen Hälften kann nun mit geeignetem Werkzeug der Kommunikationsstecker entnommen werden, indem die Schraubmuttern gelöst werden.
Im Folgenden wird der Kern der Erfindung an einem Ausführungsbeispiel anhand von Figur 2 erörtert. Dieses zeigt in Frontalansicht den das Mittelstück des erfindungsgemäßen Installationsgeräts darstellenden einstückig kombinierten Montagering und die Trägerplatte (3), die hier aus zwei Hälften besteht. Diese Einheit beinhaltet zum einen azimental verlaufende Langlöcher (5) für die Befestigung in einer Unterputzdose oder einer Einbauöffnung. Weiter sind acht Löcher (6) zum Aufnehmen der Zapfen der Sichtblenden vorgesehen. Darüber hinaus sind in der oberen Hälfte zwei Cinch-Stecker (7) integriert und in der unteren Hälfte ist ein S-Video-Stecker (8) verbaut. Gut erkennbar ist hier, dass die aus dem Montagering und der Trägerplatte (3) gebildete Einheit aus zwei Hälften besteht, welche randseitig in der Mitte zusammengefügt sind und aneinander anliegen.

### Bezugszeichenliste

1. Sichtblenden
2. Schalterahmen.
3. Montagering und Trägerplatte
4. Unterputzdose
5. Langlochartige Befestigungslöcher.
6. Aufnahmelöcher
7. Cinch-Stecker-Dose
8. S-Video-Stecker-Dose

## Patentansprüche

1. Elektrisches Installationsgerät zur Installation von Datenanschlussmodulen in einer Einbauöffnung, beispielsweise einer Installationsdose, mit einem Montagering zur Verschraubung an der Einbauöffnung, mit einer Trägerplatte zur Aufnahme von wenigstens einer Kommunikationsschnittstelle und mit einem Schalterrahmen (2), wobei der Montagering und die Trägerplatte einstückig sind, **dadurch gekennzeichnet, dass** der Montagering und die Trägerplatte (3) durch Trennflächen senkrecht deren Ebene, die von Außenrand zu Außenrand durchgehend verlaufen, in mehrere Teile getrennt sind.

2. Elektrisches Installationsgerät nach Anspruch 1, **dadurch gekennzeichnet, dass** die Teile an benachbarten Rändern, z.B. durch Schrauben oder Rastverbindung, verbindbar sind.

3. Elektrisches Installationsgerät nach Anspruch 1 und 2, **dadurch gekennzeichnet, dass** der Montagering und die Trägerplatte (3) aus zwei Hälften bestehen.

4. Elektrisches Installationsgerät nach Anspruch 1 und 2, **dadurch gekennzeichnet, dass** der Montagering und dieTrägerplatte (3) aus mehreren Segmenten bestehen.

5. Elektrisches Installationsgerät nach vorgehenden Ansprüchen, **dadurch gekennzeichnet, dass** ein oder mehrere Sichtblende(n) (1) an dem Montagering und der Trägerplatte (3) von aussen befestigt sind, welche die Öffnung der Kommunikationsschnittstelle umschreiben.

6. Elektrisches Installationsgerät nach Anspruch 5, **gekennzeichnet durch** eine lösbare Befestigung.

7. Elektrisches Installationsgerät nach Anspruch 6, **dadurch gekennzeichnet, dass** an der Unterseite der Sichtblende(n) (1) Zapfen angeformt sind, die in passend zugeordnete Aufnahmelöcher mittels Klemm- oder Press-Sitz eingreifen.

8. Elektrisches Installationsgerät nach einem der Ansprüchen 1 - 7, **dadurch gekennzeichnet, dass** die Sichtblende(n) (1) derart bemessen sind, dass sie von außen an den inneren Rändern des Schalterrahmens (2) aufliegen.

9. Elektrisches Installationsgerät nach einem der Ansprüchen 1 - 8, **dadurch gekennzeichnet, dass** mehrere elektrische Installationsgeräte benachbart zueinander angeordnet sind und einen gemeinsamen Schalterrahmen (2) aufweisen.

10. Elektrisches Installationsgerät nach einem der Ansprüchen 1 - 9, **dadurch gekennzeichnet, dass** zwischen Sichtblende(n) (1) und Schalterrahmen (2) ein Adapterrahmen angeordnet ist, an dessen innerer Berandung die Sichtblende(n) (1) von außen her zumindest teilweise aufliegen und dessen äußerer Rand an den inneren Rändern des Schalterrahmens (2) ebenfalls von außen aufliegen.

## Claims

1. Electrical installation device for installing data connection modules in an installation opening, such as an installation box, comprising a mounting ring for screw-mounting on the installation hole, a support plate for receiving at least one communication interface and a switch frame (2), wherein the mounting ring and carrier plate are integral, **characterised in that** the mounting ring and the carrier plate (3) are separated into a plurality of portions by means of partition surfaces, which are perpendicular to the plane thereof and extend continuously from outer edge to outer edge.

2. Electrical installation device according to claim 1, **characterized in that** the portions of adjacent edges can be connected, for example by means of screws or snap-in connections.

3. Electrical installation device according to claims 1 and 2, **characterized in that** the mounting ring and the carrier plate (3) consists of two halves.

4. Electrical installation device according to claims 1 and 2, **characterized in that** the mounting ring and the carrier plate (3) consists of a plurality of segments.

5. Electrical installation device according to the preceding claims, **characterized in that** one or more screen panel(s) (1) are attached on the mounting ring and the carrier plate (3) from the outside, which circumscribe the opening of the communication interface.

6. Electrical installation device according to claim 5, **characterized by** a detachable fastening.

7. Electrical installation device according to claim 6, **characterized in that,** on the underside of the screen panel(s) (1), pins are integrally moulded, which, by means of clamping or force-fit, engage in suitably assigned receiving holes.

8. Electrical installation device according to any one of claims 1 to 7, **characterized in that** the screen panel (s) (1) are dimensioned such that, from the outside, they rest against the inner edges of the switch frame (2).

9. Electrical installation device according to any one of claims 1 to 8, **characterized in that** a plurality of electrical installation devices are arranged adjacent to each other and comprise a common switch frame (2).

10. Electrical installation device according to one of claims 1 to 9, **characterized in that** between the screen panel(s) (1) and switch frame (2), there is arranged an adapter frame, against the inner rim of which the screen panel(s) (1), from the outside, at least partially rest, and of which the outer edge, also from the outside, rests against the inner edges of the switch frame (2).

## Revendications

1. Appareil d'installation électrique destiné à installer des modules de raccordement de données dans une ouverture de montage, par exemple un boîtier d'installation, avec une bague de montage pour vissage sur l'ouverture de montage, avec une plaque porteuse pour réceptionner au moins une interface de communication et avec un cadre d'interrupteur (2), sachant que la bague de montage et la plaque porteuse sont en une pièce, **caractérisé par le fait que** la bague de montage et la plaque porteuse (3) sont séparées verticalement par rapport à leur niveau, par des surfaces de séparation qui vont de bord extérieur à bord extérieur.

2. Appareil d'installation électrique selon la revendication 1, **caractérisé par le fait que** les pièces peuvent être reliées à des bords voisins, par exemple à l'aide de vis ou de liaison par encrantage.

3. Appareil d'installation électrique selon les revendications 1 ou 2, **caractérisé par le fait que** la bague de montage et la plaque porteuse (3) consistent en deux moitiés.

4. Appareil d'installation électrique selon les revendications 1 ou 2, **caractérisé par le fait que** la bague de montage et la plaque porteuse (3) consistent en plusieurs segments.

5. Appareil d'installation électrique selon une des revendications précédentes, **caractérisé par le fait qu'**un ou plusieurs caches visuels (1) sont fixés sur la bague de montage et la plaque porteuse (3) depuis l'extérieur, en entourant l'ouverture de l'interface de communication.

6. Appareil d'installation électrique selon la revendication 5, **caractérisé par** une fixation détachable.

7. Appareil d'installation électrique selon la revendication 6, **caractérisé par le fait que** sur la face inférieure du ou des caches visuels (1) sont formés des pivots qui s'encrantent au moyen d'un siège de serrage ou de pressage dans des trous de réception adaptés attribués.

8. Appareil d'installation électrique selon une des revendications 1 - 7, **caractérisé par le fait que** le ou les caches visuels (1) sont mesurés de manière à reposer de l'extérieur sur les bords intérieurs du cadre d'interrupteur (2).

9. Appareil d'installation électrique selon une des revendications 1 - 8, **caractérisé par le fait que** des appareils d'installation électriques peuvent être disposés les uns à côté des autres dans un nombre quelconque en présentant un cadre d'interrupteur (2) commun.

10. Appareil d'installation électrique selon une des revendications 1 - 9, **caractérisé par le fait qu'**entre le ou les caches visuels (1) et le cadre d'interrupteur (2) est disposé un cadre adaptateur sur le bord intérieur duquel le ou les caches visuels reposent en partie et dont le bord extérieur repose également de l'extérieur sur les bords intérieurs du cadre d'interrupteur (2).
